Europäisches Patentamt

European Patent Office

Office européen des brevets

(11) Numéro de publication: **0 407 299 A2**

## (12) DEMANDE DE BREVET EUROPEEN

(21) Numéro de dépôt: 90401937.9

(22) Date de dépôt: 04.07.90

(51) Int. Cl.5: **A23B 7/153**, A23B 7/08,
A23B 7/022

(30) Priorité: 04.07.89 FR 8908956

(43) Date de publication de la demande:
09.01.91 Bulletin 91/02

(84) Etats contractants désignés:
AT BE CH DE DK ES FR GB GR IT LI LU NL SE

(71) Demandeur: **S.A. DAREGAL Société:**
**6 Boulevard Joffre**
**F-91490 Milly la Foret(FR)**

(72) Inventeur: **Darbonne, Luc**
**Le Prieuré, Oncy sur Ecole**
**F-91490 Milly la Foret(FR)**
Inventeur: **Bain, Jacques**
**8, rue de Thorigny**
**F-76130 Mont Saint Aignan(FR)**

(74) Mandataire: **Derambure, Christian et al**
**BUGNION ASSOCIES 55, rue Boissonade**
**F-75014 Paris(FR)**

(54) **Procédé de traitement d'herbe ou plante aromatique ou de plante à essence.**

(57) Procédé de traitement d'herbe ou de plante aromatique ou à essence, dans lequel :
- on part d'une herbe ou plante fraiche ;
- on·immerge l'herbe ou plante dans une solution aqueuse comprenant :
- au moins un anti-oxygène ;
- au moins un dépresseur de l'activité de l'eau ;
- on essore l'herbe ou plante ;
- on surgèle l'herbe ou plante ;
- on immerge l'herbe ou plante dans une solution aqueuse comprenant :
- au moins un stabilisant ;
- au moins un anti-oxigène ;
- au moins un rétenteur d'arôme ;
- au moins un exhausteur de goût ;
- on tamise l'herbe ou plante ; et
- on sèche l'herbe ou plante jusqu'à obtenir une activité en eau de l'ordre de 0,3 à 0,6 pour une teneur résiduelle en eau de l'ordre de 10 à 20 %.

EP 0 407 299 A2

## PROCEDE DE TRAITEMENT D'HERBE OU PLANTE AROMATIQUE OU DE PLANTE A ESSENCE

L'invention concerne le traitement des herbes ou plantes aromatiques ou les plantes à essence (dénommées par la suite végétaux).

Les végétaux concernés par l'invention sont typiquement du persil, de la ciboulette, du thym, etc... ou encore des légumes. En sont exclus les épices, produits secs.

On connaît trois modes principaux de présentation de tels végétaux : frais, surgelé, ou déshydraté. La présentation à l'état frais présente l'avantage de bonnes qualités organoleptiques mais l'inconvénient d'une conservation de durée limitée et pouvant être mal commode. La surgélation pallie cet inconvénient mais implique la mise en oeuvre d'une chaîne de froid coûteuse et pouvant présenter le risque d'une interruption. La présentation déshydratée permet une conservation longue et aisée mais les qualités organoleptiques des végétaux ainsi présentés sont généralement inférieures à celles obtenues à l'état frais. Ces qualités organoleptiques comprennent principalement la texture, la couleur, l'arôme ou le goût. S'y ajoute la fonctionnalité, c'est-à-dire la possibilité d'être employé dans les conditions souhaitées.

L'invention vise donc à présenter des végétaux tels que herbes ou plantes aromatiques ou plantes à essence de manière que simultanément leurs qualités organoleptiques soient identiques ou très proches de celles de l'état frais et que leur conservation puisse intervenir dans des conditions comparables à celles de l'état déshydraté, compte-tenu des avantages qu'elles présentent.

Selon le document US-A-4 514 428 on réalise des snacks sous forme de tranche de pommes au moyen d'une succession d'étapes de lavage, antibrunissement, imprégnation de sucre et séchage. Un tel procédé, bien spécifique, ne permet pas de traiter des herbes ou plantes aromatiques ou des plantes à essence pour l'objectif visé ci-dessus.

Le document US-A-4 313 967 concerne un produit alimentaire stable du point de vue microbiologique, contenant un fruit tel que raisin, datte, prune, abricot, pomme, pêche, cerise, citron. Ce produit a une AW comprise entre 0,008 et 0,93.

Le document FOOD TECHNOLOGY, vol. 31 n° 4 d'avril 1977 pages 58 à 64 concerne les produits alimentaires à humidité intermédiaire et révèle les effets de divers additifs sur la teneur en eau.

Les documents US-A-3 952 112, US-A-4 832 969, US-A-3 694 236, US-A-4 361 589, GB-A-1 483 805, US-A-4 542 033 révèlent l'usage de sorbitol ou glycérol comme humectant pour des raisins ; la réalisation d'un légume vert séché emballé dans un paquet noir, scellé, imperméable à l'oxygène ; la réalisation d'un aliment séché déshydraté mettant en oeuvre du Xanthomonas ; la réalisation de céleri séché en mettant en oeuvre du sucre et un séchage ultérieur ; le traitement de fruits entiers séchés.

Les objectifs précédemment mentionnés sont réalisés par l'invention à savoir les procédés de traitement d'herbes ou plantes aromatiques ou de plantes à essence mettant en oeuvre les combinaisons de phases opératoires consistant à assurer un blocage enzymatique de l'herbe ou de la plante ; à surgeler l'herbe ou la plante ; à imprégner l'herbe ou la plante afin de séquestrer l'eau et les arômes qu'elle contient ; à sécher et déshydrater l'herbe ou la plante à température modérée jusqu'à limiter son activité en eau en dessous de 0,6 environ pour une teneur résiduelle en eau inférieure à 20 %.

Le blocage enzymatique est mis en oeuvre par mise en contact de l'herbe ou de la plante avec une solution aqueuse comportant des additifs (stabilisant, antioxygène, dépresseur de l'activité de l'eau). La surgélation de l'herbe ou de la plante ést du type IQF (Individual Quick Freezing). La séquestration de l'eau et des arômes de l'herbe ou de la plante est obtenue par mise en contact de celle-ci avec une solution aqueuse ayant des additifs (stabilisants, antioxygène, rétenteur d'arôme et exhausteur de goût).

Les autres caractéristiques de l'invention résulteront de la description qui suivra.

L'invention concerne des procédés de traitement d'herbes ou plantes aromatiques ou de plantes à essence (typiquement persil, ciboulette, thym, etc ou encore légumes, à l'exception des épices et produits secs).

Ces procédés visent essentiellement à améliorer les qualités organoleptiques des herbes ou plantes ainsi traitées et, en combinaison de permettre leur conservation dans des conditions comparables à celles de l'état deshydraté.

Ces procédés mettent en oeuvre des combinaisons de phases opératoires fonctionnelles à savoir une phase dans laquelle une herbe ou plante fraîche récemment récoltée est bloquée enzymatiquement (phase I), une phase de surgélation de l'herbe ou de la plante (phase II), une phase de séquestration de l'eau et des arômes de la plante (phase III), et une phase de séchage et deshydratation de l'herbe ou de la plante à température modérée jusqu'à limiter son activité en eau (AW) en dessous de 0,6 environ pour une teneur résiduelle en eau inférieure à 20 % (phase IV).

La phase II de surgélation est de type IQF (Individual Quick Freezing).

Dans les phases I et III, l'herbe ou la plante est mise en contact avec une solution aqueuse comprenant principalement de l'eau et des additifs fonctionnels. Cette mise en contact de l'herbe ou la plante avec cette solution aqueuse est réalisée par immersion.

La solution aqueuse mise en oeuvre dans la phase I comprend au moins 80 % d'eau et, comme additifs :

- Au moins un stabilisant choisi dans le groupe comprenant le sorbitol, un polyol tel que mannitol, xylitol, glycérol, un sucre tel que saccharose, glucose, lactose, malto-dextrine 12 ≤DE inférieur à ≤30 ou équivalent, dans une proportion comprise entre 5 et 10 %.

- Au moins un antioxygène choisi dans le groupe comprenant l'acide ascorbique, l'ascorbate de sodium, l'alpha-tocophérol, le butylhydroxyanisol, le butylhydroxytoluène, le sulfite de sodium, le sulfite acide de sodium, le disulfite de sodium, le disulfite de potassium et le disulfite de calcium ou équivalent dans une proportion comprise entre 1,5 % et 3 %.

- Au moins un dépresseur de l'activité de l'eau choisi dans le groupe comprenant le chlorure de calcium, le chlorure de sodium, l'acide orthophosphorique, le lactate de sodium et le lactate de calcium ou équivalent dans une proportion comprise entre 0,5 % et 1 %.

Toutes les proportions indiquées dans le texte s'entendent en poids et s'étendent aux valeurs extérieures mais proches des bornes indiquées, aux environs de celles-ci. Les listes de corps s'étendent aux équivalents fonctionnels.

La solution mise en oeuvre dans la phase I a un taux de matière sèche de 7 à 8 % environ (mesuré au réfractomètre), un pH compris entre 2,5 et 3,5 environ (à 20° C).

La température de la solution aqueuse mise en oeuvre dans la phase I est comprise entre environ 35° C et 55° C et préférentiellement elle est le plus proche possible de 35° C. La durée d'immersion de l'herbe ou de la plante fraîche est de l'ordre de quelques minutes. Par exemple, les durées d'immersion peuvent être de 3, 4, 6 mn. environ pour des températures de solution de respectivement 55°, 45° et 35° C.

La solution mise en oeuvre dans la phase III comprend qu'au moins 60 % d'eau et, comme additifs :

- Au moins un stabilisant choisi dans le groupe comprenant le sorbitol, un polyol tel que mannitol, xylitol, glycérol, un sucre tel que saccharose, glucose, lactose, malto-dextrine de 12 ≤DE et inférieur à ≤30 ou équivalent, dans une proportion comprise entre 20 % et 40%.

- Au moins un antioxygène choisi dans le groupe comprenant l'acide ascorbique, l'ascorbate de sodium, l'alpha-tocophérol, le butylhydroxyanisol, le butylhydroxytoluène, le sulfite de sodium, le sulfite acide de sodium, le disulfite de sodium, le disulfite de potassium et le sulfite de calcium ou équivalent, dans une proportion comprise entre 0,20 et 0,45.

- Au moins un rétenteur d'arôme choisi dans le groupe comprenant la gomme arabique, le carboxymétylcellulose, l'amidon modifié, l'éthylmaltol ou équivalent, dans une proportion comprise entre 0,9 % et 1,8 %.

- Au moins un exhausteur de goût tel que le glutamate monosodique ou équivalent dans une proportion comprise entre 1 et 2 % environ.

Cette solution a un taux de matière sèche (mesuré au réfractomètre) compris entre 25 et 40 % environ. Son pH est compris entre 4,5 et 6,5 environ (à 20° C). Sa température de mise en oeuvre est comprise entre 10° C et 50° C. Elle est préférentiellement égale ou proche de 20° à 30° C. La durée d'immersion est inversement proportionnelle à la température. Elle est comprise entre 15 et 50 mn. environ et préférentiellement entre 30 et 40 mn. environ.

Dans la phase III, les durées d'immersion peuvent être les suivantes en fonction de la température de la solution :

Température : 10, 15, 20, 25, 30, 35, 40, 45, 50

Temps d'immersion en minutes : 50, 45, 40, 35, 30, 25, 21, 17, 15.

La phase I suit un état de départ utilisant une herbe ou une plante fraîche récemment récoltée. Cette phase est suivie d'une phase intermédiaire d'essorage de l'herbe ou de la plante une fois que celle-ci a été immergée dans la solution aqueuse de la phase I.

La phase III est réalisée sous agitation. La surgélation de l'herbe ou de la plante par la méthode IQF permet à celle-ci d'être à l'état divisé.

La phase III est suivie d'une phase intermédiaire de tamisage permettant de séparer l'herbe ou la plante de la solution aqueuse de la phase III.

La phase IV de déshydratation et de séchage est réalisée avec une température de l'herbe ou de la plante au cours du séchage comprise entre 50 et 65° C environ. Cette phase IV permet d'éliminer par déshydratation une quantité convenable d'eau de manière à obtenir une activité en eau (AW) comprise entre 0,3 et 0,6 environ pour une teneur résiduelle en eau de 10 à 20 % environ.

D'excellents résultats ont été obtenus en mettant en oeuvre, dans la phase I du sorbitol, de l'acide ascorbique et du chlorure de calcium dans les pourcentages suivants : 6 %, 1,5 % et 0,5 % ajoutés à 92 % d'eau. Et, dans la phase III, en mettant en oeuvre du sorbitol, de la gomme arabique, du glutamate monosodique et de l'acide ascorbique dans les pourcentages suivants : 27 %, 1,26 %, 1,44 % et 0,3 %..

Plusieurs essais ont été réalisés en ce qui concerne la solution aqueuse de la phase III et ont donné d'excellents résultats. Ces essais résultent du tableau suivant (les valeurs sont données en %) :

| Concentration | 25 | 30 | 35 | 40 |
|---|---|---|---|---|
| Eau | 75 | 70 | 65 | 60 |
| Sorbitol | 22,5 | 27 | 31,5 | 36 |
| Gomme arabique | 1,05 | 1,26 | 1,47 | 1,68 |
| Glutamate monosodique | 1,2 | 1,44 | 1,68 | 1,92 |
| Acide ascorbique | 0,25 | 0,3 | 0,35 | 0,4 |

La proportion d'herbe ou plante traitée dans la phase III dépend de la concentration de la solution mise en oeuvre dans cette phase, ainsi que de l'état dans lequel se trouve l'herbe ou la plante (état frais ou surgelé). Cette relation quantité d'herbe ou plante traitée/concentration de la solution mise en oeuvre est généralement linéaire et croissante. Pour les valeurs extremes envisagées en ce qui concerne la concentration soit 25 % et 40 %, les pourcentages de produits à traiter sont :
- A l'état frais de 8 et 13
- A l'état surgelé de 10 et 18
Ces valeurs étant indicatives.

Dans une première variante possible, on combine les phases I et II avec la phase intermédiaire d'essorage. Cela permet d'obtenir des herbes ou plantes aromatiques ou des plantes à essence surgelées, à partir d'herbes ou plantes fraîches avec des qualités organoleptiques améliorées.

Dans une deuxième variante possible, on combine la phase I avec une phase de déshydratation conventionnelle et, de façon intermédiaire, une phase d'essorage. Cela permet d'obtenir des herbes ou plantes aromatiques ou des plantes à essence déshydratées ayant également des qualités organoleptiques améliorées.

Dans une troisième variante, on combine la phase II, la phase III et la phase IV avec, entre les phases II et III, le tamisage mentionné. Cela permet d'obtenir des herbes ou plantes séchées à humidité intermédiaire. Soit on part d'herbes ou plantes déjà surgelées auquel cas la phase I initiale peut ne pas être mise en oeuvre, soit on part d'herbes ou plantes fraîches et la phase I initiale est mise en oeuvre. Dans ces deux variantes, on obtient une herbe ou plante qui par rapport à un produit déshydraté conventionnellement restitue lors de la réhydratation les qualités d'une herbe ou plante fraîche notamment en ce qui concerne la couleur et l'arôme. De plus, la réhydratation est quasi instantanée. Pour illustrer les effets obtenus par la mise en oeuvre de l'invention, on peut dire que le taux de réhydratation A ($=Pm/Po$ avec $Po = 10$ g.) à 60°C est de l'ordre de 6 pour des herbes traitées conformément à la troisième variante pour seulement de l'ordre de 3,5 pour des herbes deshydratées conventionnelles.

## Revendications

1. Procédé de traitement d'herbe ou plante aromatique ou de plante à essence, caractérisé par le fait que :
- on part d'une herbe ou plante fraîche récemment récoltée ; et
- on immerge cette herbe ou plante dans une solution aqueuse comprenant au moins 80% en poids d'eau et, comme additifs :
au moins un stabilisant choisi dans le groupe comprenant le sorbitol, un polyol tel que mannitol, xylitol, glycérol, un sucre tel que saccharose, glucose, lactose, malto-dextrine de $12 \leq DE \leq 30$ ou équivalent, dans une proportion en poids comprise entre 5% et 10% environ ;
- au moins un anti-oxygène choisi dans le groupe comprenant l'acide ascorbique, l'ascorbate de sodium, l'alpha-tocophérol, le butylhydroxyanisol, le butylhydroxytoluène, le sulfite de sodium, le sulfite acide de sodium, le disulfite de sodium, le disulfite de potassium et le sulfite de calcium ou équivalent, dans une proportion en poids comprise entre 1,5% et 3% environ ;
- au moins un dépresseur de l'activité de l'eau choisi dans le groupe comprenant le chlorure de calcium, le chlorure de sodium, l'acide orthophosphorique, le lactate de sodium et le lactate de calcium ou équivalent, dans une proportion en poids comprise entre 0,5% et 1% environ ;
cette solution ayant un taux de matière sèche de 7 à 8% environ, un pH à 20°C compris entre 2,5 et 3,5 environ, une température comprise entre environ 35°C et 55°C et préférentiellement le plus proche de 35°C, la durée d'immersion étant de l'ordre de quelques minutes.

2. Procédé de traitement d'herbe ou plante aromatique ou de plante à essence, caractérisé par le fait que :
- on part d'une herbe ou plante fraîche récemment récoltée ;
- on immerge cette herbe ou plante dans une solution aqueuse comprenant au moins 80% en poids d'eau et, comme additifs :
- au moins un stabilisant choisi dans le groupe comprenant le sorbitol, un polyol tel que mannitol, xylitol, glycérol, un sucre tel que saccharose, glucose, lactose, malto-dextrine de 12 $\leq$DE $\leq$30 ou équivalent, dans une proportion en poids comprise entre 5% et 10% environ ;
- au moins un anti-oxygène choisi dans le groupe comprenant l'acide ascorbique, l'ascorbate de sodium, l'alpha-tocophérol, le butylhydroxyanisol, le butylhydroxytoluène, le sulfite de sodium, le sulfite acide de sodium, le disulfite de sodium, le disulfite de potassium et le sulfite de calcium ou équivalent, dans une proportion en poids comprise entre 1,5% et 3% environ ;
- au moins un dépresseur de l'activité de l'eau choisi dans le groupe comprenant le chlorure de calcium, le chlorure de sodium, l'acide orthophosphorique, le lactate de sodium et le lactate de calcium ou équivalent, dans une proportion en poids comprise entre 0,5% et 1% environ ;
cette solution ayant un taux de matière sèche de 7 à 8% environ, un pH à 20°C compris entre 2,5 et 3,5 environ, une température comprise entre environ 35°C et 55°C et préférentiellement le plus proche de 35°C, la durée d'immersion étant de l'ordre de quelques minutes ;
- on essore l'herbe ou la plante après immersion ; et
- on surgèle l'herbe ou la plante ainsi essorée.

3. Procédé selon la revendication 2, caractérisé par le fait qu'on surgèle l'herbe ou la plante selon le procédé IQF "Individual Quick Freezing".

4. Procédé de traitement d'herbe ou plante aromatique ou de plante à essence, caractérisé par le fait que :
- on part d'une herbe ou plante fraîche récemment récoltée ;
- on immerge cette herbe ou plante dans une solution aqueuse comprenant au moins 80% en poids d'eau et, comme additifs :
- au moins un stabilisant choisi dans le groupe comprenant le sorbitol, un polyol tel que mannitol, xylitol, glycérol, un sucre tel que saccharose, glucose, lactose, malto-dextrine de 12 $\leq$DE $\leq$30 ou équivalent, dans une proportion en poids comprise entre 5% et 10% environ ;
- au moins un anti-oxygène choisi dans le groupe comprenant l'acide ascorbique, l'ascorbate de sodium, l'alpha-tocophérol, le butylhydroxyanisol, le butylhydroxytoluène, le sulfite de sodium, le sulfite acide de sodium, le disulfite de sodium, le disulfite de potassium et le sulfite de calcium, dans une proportion en poids comprise entre 1,5% et 3% environ ou équivalent;
- au moins un dépresseur de l'activité de l'eau choisi dans le groupe comprenant le chlorure de calcium, le chlorure de sodium, l'acide orthophosphorique, le lactate de sodium et le lactate de calcium ou équivalent, dans une proportion en poids comprise entre 0,5% et 1% environ ;
cette solution ayant un taux de matière sèche de 7 à 8% environ, un pH à 20°C compris entre 2,5 et 3,5 environ, une température comprise entre environ 35°C et 55°C et préférentiellement le plus proche de 35°C, la durée d'immersion étant de l'ordre de quelques minutes ;
- on essore l'herbe ou la plante après immersion ; et
- on déshydrate l'herbe ou la plante ainsi essorée.

5. Procédé de traitement d'herbe ou plante aromatique ou de plante à essence, caractérisé par le fait que :
- on part d'une herbe ou plante surgelée ;
- on immerge sous agitation cette herbe ou plante ainsi surgelée dans une solution aqueuse comprenant au moins 60% en poids d'eau et, comme additifs :
- au moins un stabilisant choisi dans le groupe comprenant le sorbitol, un polyol tel que mannitol, xylitol, glycérol, un sucre tel que saccharose, glucose, lactose, malto-dextrine de 12 <DE <30 ou équivalents, dans une proportion en poids comprise entre 15% et 40% environ ;
- au moins un anti-oxygène choisi dans le groupe comprenant l'acide ascorbique, l'ascorbate de sodium, l'alpha-tocophérol, le butylhydroxyanisol, le butylhydroxytoluène, le sulfite de sodium, le sulfite acide de sodium, le disulfite de sodium, le disulfite de potassium et le sulfite de calcium ou équivalents, dans une proportion en poids comprise entre 0,15% et 0,5% environ ;
- au moins un rétenteur d'arôme choisi dans le groupe comprenant la gomme arabique, le carboxy méthylcellullose, l'amidon modifié, l'éthyl maltol, ou équivalents dans une proportion en poids comprise entre 0,9% et 1,8% environ ;

EP 0 407 299 A2

- au moins un exhausteur de goût tel que le glutamate monosodique ou équivalent dans une proportion en poids comprise entre 1 % et 2 % environ ;
cette solution ayant un taux de matière sèche de 25 à 40% environ, un pH à 20°C compris entre 4,5 et 6,5 environ, une température comprise entre environ 10°C et 50°C et préférentiellement égale ou proche de 20 à 30°C environ, la durée d'immersion, inversement proportionnelle à la température, étant comprise entre 15 et 50 minutes environ, et préférentiellement entre 30 et 40 minutes environ ;
- on tamise l'herbe ou la plante après immersion; et
- on déshydrate l'herbe ou la plante ainsi tamisée.

6. Procédé de traitement d'herbe ou plante aromatique ou de plante à essence, caractérisé par le fait que :
- on part d'une herbe ou plante surgelée ;
- on immerge sous agitation cette herbe ou plante ainsi surgelée dans une solution aqueuse comprenant au moins 60% en poids d'eau et, comme additifs :
- au moins un stabilisant choisi dans le groupe comprenant le sorbitol, un polyol tel que mannitol, xylitol, glycérol, un sucre tel que saccharose, glucose, lactose, malto-dextrine de 12 $\leq$DE $\leq$30 ou équivalent, dans une proportion en poids comprise entre 20% et 40% environ ;
- au moins un anti-oxygène choisi dans le groupe comprenant l'acide ascorbique, l'ascorbate de sodium, l'alpha-tocophèrol, le butylhydroxyanisol, le butylhydroxytoluène, le sulfite de sodium, le sulfite acide de sodium, le disulfite de sodium, le disulfite de potassium et le sulfite de calcium ou équivalents, dans une proportion en poids comprise entre 0,2% et 0,45% environ ;
- au moins un rétenteur d'arôme choisi dans le groupe comprenant la gomme arabique, le carboxy méthylcellullose, l'amidon modifié, l'éthyl maltol ou équivalents dans une proportion en poids comprise entre 0,9 % et 1,8 % environ ;
- au moins un exhausteur de goût tel que le glutamate monosodique ou équivalent dans une proportion en poids comprise entre 1% et 2 environ ;
cette solution ayant un taux de matière sèche de 25 à 40% environ, un pH à 20°C compris entre 4,5 et 6,5 environ, une température comprise entre environ 10°C et 50°C et préférentiellement égale ou proche de 20 à 30°C environ, la durée d'immersion, inversement proportionnelle à la température, étant comprise entre 15 et 50 minutes environ, et préférentiellement entre 30 et 40 minutes environ ;
- on tamise l'herbe ou la plante après son immersion ; et
- on sèche l'herbe ou la plante ainsi tamisée à une température entre environ 50°C et 65°C jusqu'à obtenir une activité en eau de l'ordre de 0,3 à 0,6 pour une teneur résiduelle en eau de l'ordre de 10 à 20%, de manière à obtenir une herbe ou plante séchée à réhydratation rapide et qualités organoleptiques améliorées.

7. Procédé de traitement d'herbe ou plante aromatique ou de plante à essence, caractérisé par le fait que :
- on part d'une herbe ou plante fraîche récemment récoltée ;
- on immerge cette herbe ou plante dans une solution aqueuse d'eau et, comme additifs :
- au moins un stabilisant tel que le sorbitol ou équivalent dans une proportion en poids inférieure à 10% environ ;
- au moins un anti-oxygène;
- au moins un dépresseur de l'activité de l'eau tel que le chlorure de calcium ou équivalent;
cette solution ayant un taux de matière sèche de 7 à 8% environ, un pH à 20°C compris entre 2,5 et 3,5 environ, une température comprise entre environ 30°C et 60°C et préférentiellement le plus proche de 30°C, la durée d'immersion étant de l'ordre de quelques minutes ;
- on essore l'herbe ou la plante après immersion ; et
- on surgèle l'herbe ou la plante ainsi essorée ;
- on immerge cette herbe ou plante ainsi surgelée dans une solution aqueuse comprenant de l'eau, et comme additifs :
- au moins un stabilisant tel que le sorbitol ou équivalent ;
- au moins un anti-oxygène ;
- au moins un rétenteur d'arôme tel que la gomme arabique ou équivalent;
- au moins un exhausteur de goût tel que le glutamate monosodique ou équivalent;
cette solution ayant un taux de matière sèche de 25 à 40% environ, un pH à 20°C compris entre 4,5 et 6,5 environ, une température comprise entre environ 10°C et 50°C et préférentiellement égale ou proche de 20 à 30°C environ, la durée d'immersion, inversement proportionnelle à la température, étant comprise entre 15 et 50 minutes environ, et préférentiellement entre 30 et 40 minutes environ ;
- on tamise l'herbe ou la plante après son immersion ; et
- on sèche l'herbe ou la plante ainsi tamisée à une température entre environ 50°C et 65°C jusqu'à obtenir une activité en eau de l'ordre de 0,3 à 0,6 pour une teneur résiduelle en eau de l'ordre de 10 à 20%, de

6

manière à obtenir une herbe ou plante séchée à réhydratation rapide et qualités organoleptiques améliorées.

8. Procédé de traitement d'herbe ou plante aromatique ou de plante à essence, caractérisé par le fait que :
- on part d'une herbe ou plante fraîche récemment récoltée ;
- on immerge cette herbe ou plante dans une solution aqueuse comprenant au moins 80% en poids d'eau et, comme additifs :
- au moins un stabilisant choisi dans le groupe comprènant le sorbitol, un polyol tel que mannitol, xylitol, glycérol, un sucre tel que saccharose, glucose, lactose, malto-dextrine de 12 ≤DE ≤30 ou équivalent, dans une proportion en poids comprise entre 5% et 10% environ ;
- au moins un anti-oxygène choisi dans le groupe comprenant l'acide ascorbique, l'ascorbate de sodium, l'alpha-tocophérol, le butylhydroxyanisol, le butylhydroxytoluène, le sulfite de sodium, le sulfite acide de sodium, le disulfite de sodium, le disulfite de potassium et le sulfite de calcium ou équivalent, dans une proportion en poids comprise entre 1,5% et 3% environ ;
- au moins un dépresseur de l'activité de l'eau choisi dans le groupe comprenant le chlorure de calcium, le chlorure de sodium, l'acide orthophosphorique, le lactate sodium et le lactate de calcium ou équivalent, dans une proportion en poids comprise entre 0,5% et 1% environ ;
cette solution ayant un taux de matière sèche de 7 à 8% environ, un pH à 20°C compris entre 2,5 et 3,5 environ, une température comprise entre environ 35°C et 55°C et préférentiellement le plus proche de 35°C, la durée d'immersion étant de l'ordre de quelques minutes ;
- on essore l'herbe ou la plante après immersion ;
- on surgèle l'herbe ou la plante ainsi essorée ;
- on immerge sous agitation cette herbe ou plante ainsi surgelée dans une solution aqueuse comprenant au moins 60% en poids d'eau et, comme additifs :
- au moins un stabilisant choisi dans le groupe comprenant le sorbitol, un polyol tel que mannitol, xylitol, glycérol, un sucre tel que saccharose, glucose, lactose, malto-dextrine de 12 ≤DE ≤30 ou équivalent, dans une proportion en poids comprise entre 15% et 40% environ ;
- au moins un anti-oxygène choisi dans le groupe comprenant l'acide ascorbique, l'ascorbate de sodium, l'alpha-tocophèrol, le butylhydroxyanisol, le butylhydroxytoluène, le sulfite de sodium, le sulfite acide de sodium, le disulfite de sodium, le disulfite de potassium et le sulfite de calcium ou équivalent, dans une proportion en poids comprise entre 0,15% et 0,5% environ ;
- au moins un rétenteur d'arôme choisi dans le groupe comprenant la gomme arabique, le carboxy méthylcellullose, l'amidon modifié ou équivalent, l'éthyl maltol dans une proportion en poids comprise entre 0,9% et 1,8% environ ;
- au moins un exhausteur de goût tel que le glutamate monosodique ou équivalent dans une proportion en poids comprise entre 1 % et 2 % environ ;
cette solution ayant un taux de matière sèche de 25 à 40% environ, un pH à 20°C compris entre 4,5 et 6,5 environ, une température comprise entre environ 10°C et 50°C et préférentiellement égale ou proche de 20 à 30°C environ, la durée d'immersion, inversement proportionnelle à la température, étant comprise entre 15 et 50 minutes environ, et préférentiellement entre 30 et 40 minutes environ ;
- on tamise l'herbe ou la plante après son immersion ; et
- on sèche l'herbe ou la plante ainsi tamisée à une température entre environ 50°C et 65°C jusqu'à obtenir une activité en eau de l'ordre de 0,3 à 0,6 pour une teneur résiduelle en eau de l'ordre de 10 à 20%, de manière à obtenir une herbe ou plante séchée à réhydratation rapide et qualités organoleptiques améliorées.

9. Procédé selon la revendication 8, caractérisé par le fait qu'on surgèle l'herbe ou la plante selon le procédé IQF "Individual Quick Freezing".

10. Procédé de traitement d'herbe ou plante aromatique ou de plante à essence, caractérisé par le fait que :
- on part d'une herbe ou plante fraîche récemment récoltée ;
- on met l'herbe ou la plante en contact avec une solution aqueuse avec des additifs aptes à assurer son blocage enzymatique ;
- on surgèle l'herbe ou la plante ;
- on met l'herbe ou la plante à l'état surgelé en contact avec une solution aqueuse avec des additifs aptes à assurer l'imprégnation de l'herbe ou de la plante décongelée afin de séquestrer l'eau et les arômes qu'elle contient ;
- on sèche et déshydrate l'herbe ou la plante à température modérée jusqu'à limiter son activité en eau en dessous de 0,6 environ pour une teneur résiduelle en eau inférieure à 20%.